# EUROPEAN PATENT SPECIFICATION

(11) **EP 3 279 469 B1**
(45) Date of publication and mention of the grant of the patent: **11.03.2020**
(21) Application number: 16182958.5
(22) Date of filing: 05.08.2016
(51) Int. Cl.: F03D 15/20, F03D 80/60

(54) **WIND TURBINE WITH IMPROVED COOLING OF THE GENERATOR AND METHOD FOR COOLING THE GENERATOR OF A WIND TURBINE**
WINDTURBINE MIT VERBESSERTER KÜHLUNG DES GENERATORS UND VERFAHREN ZUR KÜHLUNG DES GENERATORS EINER WINDTURBINE
TURBINE ÉOLIENNE À REFROIDISSEMENT AMÉLIORÉ DE LA GÉNÉRATRICE ET MÉTHODE DE REFROIDISSEMENT DE GÉNÉRATRICE D'ÉOLIENNE

(43) Date of publication of application: 07.02.2018
(73) Proprietor: Siemens Gamesa Renewable Energy A/S, 7330 Brande (DK)
(72) Inventor: Soerensen, Peter Hessellund, 8740 Brædstrup (DK); Jacobsen, Bo Nedergaard, 8300 Odder (DK)
(74) Representative: Aspacher, Karl-Georg

(56) References cited:
- EP-A2- 1 837 519
- EP-A2- 2 136 077
- US-A1- 2012 074 709
- US-A1- 2013 214 538

## Description

### Field of Invention

The present invention relates to the field of wind turbines, in particular to wind turbines comprising a cooling system for cooling the wind turbine generator during operation.

### Art Background

It is known to cool wind turbine generators by feeding cooling air from the nacelle into the generator where it is circulated to cool the coils or windings of the generator.

EP2615299B1 discloses a cooling system of a wind turbine axially transporting cooling air from non-drive-end to drive-end side of the generator-stator via air-ducts running axially through the generator-stator room. Unfortunately, the cooling air arriving at the drive-end sided end windings of the stator is warmer than at the non-drive end sided end windings due to the heated air in the generator-stator room warming up the air in the said air-ducts.

To prevent corrosion in the generator, it is important that the cooling air is sufficiently dry. In order to lower the humidity of the cooling air, a part of the heated return air may be blended with the cooling air from the nacelle as disclosed in EP2806542A.

US2012/074709A1, EP1837519A2 and EP2136077A2 show generator cooling systems for direct drive wind turbines. US2013/214538A1 is directed to a passive cooling system for power cables in a wind turbine tower.

Therefore, there may be a need for an improved cooling of a wind turbine generator.

### Summary of the Invention

The invention is defined by the independent claims. Advantageous embodiments of the present invention are described by the dependent claims.

According to a first aspect of the invention there is provided a wind turbine comprising (a) a nacelle supported by a tower, (b) a generator, (c) a rotatable front assembly arranged on a side of the generator facing away from the nacelle, and (d) a cooling system for cooling the generator by feeding cooling air from the rotatable front assembly to the generator.

This aspect of the invention is based on the idea that cooling air is fed from the rotatable front assembly and into the drive end of the generator, i.e. the part of the generator that is farthest away from the nacelle. Thereby, an efficient cooling of the generator, in particular of the drive end part of the generator, can be obtained.

The nacelle is supported by the tower which is fastened to the ground or sea bottom at its lower end. The nacelle constitutes the rear part of the wind turbine while the rotatable front assembly constitutes the front part (relative to the wind direction). The generator is arranged essentially between the nacelle and the rotatable front assembly in the sense that one side of the generator (the non drive end) faces or is located within the nacelle while the opposite side of the generator (the drive end) faces the rotatable front assembly. In case of a direct drive (gearless) wind turbine, the generator is usually located between the nacelle and the rotatable front assembly and does not extend into the nacelle. In case of a geared wind turbine, the generator may, at least in part, extend into the nacelle. The rotatable front assembly comprises a number of components which interact to convert wind energy into rotational (mechanical) energy which in turn is converted into electrical energy by the generator.

According to an embodiment of the invention, the rotatable front assembly comprises a front assembly air intake and the cooling air comprises air taken in through the front assembly air intake.

In other words, the cooling air, which the cooling system feeds from the rotatable front assembly to the generator, comprises ambient air taken in through a front assembly air intake.

According to a further embodiment of the invention, the rotatable front assembly comprises a hub, at least one rotor blade mounted on the hub, and a spinner covering the hub.

The at least one rotor blade causes the hub to rotate around an axis (and thereby drive the generator) when incoming wind hits the rotor blade(s). The spinner is a housing or shield that covers the hub in order to protect it from the environment.

According to a further embodiment of the invention, the front assembly air intake is at least partially coincident with an opening in the spinner through which the at least one rotor blade extends.

In other words, ambient air may enter the rotatable front assembly through an opening in the spinner which allows the blade to extend from the hub.

According to a further embodiment of the invention, the front assembly air intake comprises a ring-shaped opening surrounding the at least one rotor blade.

The width of the ring-shaped opening, i.e. the difference between the outer diameter and inner diameter of the ring-shaped opening, is sufficiently large to take in a substantial amount of air and on the same time small enough to assure that larger objects and significant amounts of water (rain) cannot enter the rotatable front assembly. The sum of all air intake openings, i.e. the ring-shaped openings around the blades and the optional ring-shaped opening between stator and hub, may preferably have a total area between 0.4m² and 1m², in particular around 0.6m².

Any water entering the rotatable front assembly is preferably guided through the rotor blades and ejected through openings at the blade tips as a result of the centrifugal force.

According to a further embodiment of the invention, the front assembly air intake comprises an air guide arranged on an outer surface of the spinner.

In other words, ambient air may be guided into the rotatable front assembly through an air guide, such as a duct, arranged on the outer surface of the spinner.

The opening of the air guide is sufficiently large to take in a substantial amount of air and on the same time small enough to assure that larger objects and significant amounts of water (rain) cannot enter the rotatable front assembly. The opening of the air guide may preferably have a total cross-sectional area between 0.1m² and 0.3m², in particular around 0.2m².

According to a further embodiment of the invention, the front assembly air intake comprises an intake filter and/or an intake fan.

The intake filter may for example be a moisture filter, a dirt filter, a salt filter or a combination of such filters.

According to a further embodiment of the invention, the tower comprises a tower air intake located at a base portion of the tower and power cables for transmitting power from the generator to the base portion, wherein the cooling system comprises means for guiding air from the tower air intake to the rotatable front assembly such that the air is heated by the power cables, whereby the cooling air comprises air taken in through the tower air intake. Typically, the electrical losses of the cables are typically in the range between 300 Watt and 500 Watt per meter.

The power cables, in particular power cables transmitting power from the generator down through the tower to transformers and other electrical installations located at the base portion of the tower, will heat the ambient air taken in through the tower air intake as the air is guided upwards through the tower by the guiding means. This heating of the air is mainly produced by the electrical losses of the cables and causes a reduction in the relative humidity of the air. Thus, once the tower air reaches the rotatable front assembly, it will be drier (in the sense that its relative humidity is smaller) than the air surrounding the wind turbine.

Accordingly, the air taken in through the tower air intake and guided upwards by the guiding means will be relatively dry and thus well suited for cooling the generator by itself or for blending with possibly more humid cooling air from other sources.

Furthermore, the tower air may advantageously be mixed with air in the rotatable front assembly origination from one or more different air intakes, such as air intakes corresponding to the above-described front assembly air intakes. In this case, the dry tower air will reduce the relative humidity of the cooling air resulting from the mixing. Accordingly, the tower air may advantageously be used to adjust the relative humidity of the cooling air, thereby reducing the risk of causing corrosion in the stator windings 131.

According to a further embodiment of the invention, the cooling system further comprises a tower fan arranged within the tower.

The tower fan may cause a larger amount of ambient air to be drawn in through the tower air intake.

In some embodiments, more than one tower fan may be arranged at various positions within the tower, e.g. in the vicinity of the tower air intake, close to the upper end of the tower, etc.

According to a further embodiment of the invention, the rotatable front assembly comprises one or more openings facing the generator, the openings being adapted to feed the cooling air to the generator.

The openings may in particular be formed in a rotor front plate between the hub and the generator.

According to a further embodiment of the invention, a filter is arranged in the vicinity of each of the one or more openings, i.e. in such a way that the cooling air passing through the respective opening is filtered before entering the generator.

According to a further embodiment of the invention, the filter arranged in each of the one or more openings is selected from the group consisting of a moisture filter, a dirt filter, and a salt filter.

According to a further embodiment of the invention, the cooling system further comprises one or more front fans arranged in the vicinity of at least one of the one or more openings.

More specifically, a front fan may be arranged in the vicinity of each opening, i.e. on the generator side of the opening, on the hub side of the opening, or within the opening itself. Preferably, each opening is equipped with at least one fan, such that the cooling air from the rotatable front assembly is drawn through the openings and into the generator.

According to a further embodiment of the invention, the cooling system further comprises a rear fan (main fan) arranged at a side of the generator facing away from the rotatable front assembly, the rear fan being adapted to draw the cooling air from the rotatable front assembly through the generator and towards the nacelle.

The rear fan may preferably be arranged within the nacelle at a position close to the generator to draw the cooling air from the rotatable front assembly through the generator and into an exhaust duct extending within the nacelle.

According to a further embodiment of the invention, the cooling system is further adapted to feed additional cooling air from the nacelle to the generator.

In this embodiment, cooling air is drawn into the generator from both sides, i.e. from the side facing the nacelle and from the side facing the rotatable front assembly. Thereby, a uniform cooling of the generator may be obtained.

According to a second aspect of the invention there is provided a method of cooling a generator of a wind turbine, the wind turbine comprising a nacelle supported by a tower, the generator, and a rotatable front assembly arranged on a side of the generator facing away from the nacelle. The method comprises (a) feeding cooling air from the rotatable front assembly to the generator.

This aspect of the invention is based on the same idea as the first aspect discussed above.

According to a further embodiment of the invention, the cooling air comprises air taken in through a front assembly air intake and/or air taken in through a tower air intake.

In other words, the cooling air may consist of air taken in through the front assembly air intake, of air taken in through the tower air intake, or of a blend of air taken in through the front assembly air intake and air taken in through the tower air intake.

According to a further embodiment of the invention, the cooling air comprises a mixture of air taken in through a front assembly air intake and tower air taken in through a tower air intake located at a base portion of the tower, wherein the tower air is guided up through the tower and heated by power cables extending within the tower such that the relative humidity of the tower air is lower than the relative humidity of the air taken in through the front assembly air intake.

It is noted that embodiments of the invention have been described with reference to different subject matters. In particular, some embodiments have been described with reference to method type claims whereas other embodiments have been described with reference to apparatus type claims.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a wind turbine according to an embodiment of the invention.
Figure 2 shows a wind turbine according to an embodiment of the invention.
Figure 3 shows a wind turbine according to an embodiment of the invention.
Figure 4 shows a first partial view of a rotatable front assembly of a wind turbine in accordance with an embodiment of the invention.
Figure 5 shows a further partial view of the rotatable front assembly shown in Figure 4.
Figure 6 shows a rotor front plate of a wind turbine in accordance with an embodiment of the invention.
Figure 7 shows a further partial view of the rotatable front assembly shown in Figures 4 and 5.
Figure 8 shows a tower of a wind turbine according to an embodiment of the invention.
Figure 9 shows an overview of a rotatable front assembly of a wind turbine in accordance with an embodiment of the invention.
Figure 10 shows a detailed view of a part of the rotatable front assembly shown in Figure 9.

### Detailed Description

The illustration in the drawing is schematic. It is noted that in different figures, similar or identical elements are provided with the same reference numerals or with reference numerals which differ only within the first digit.

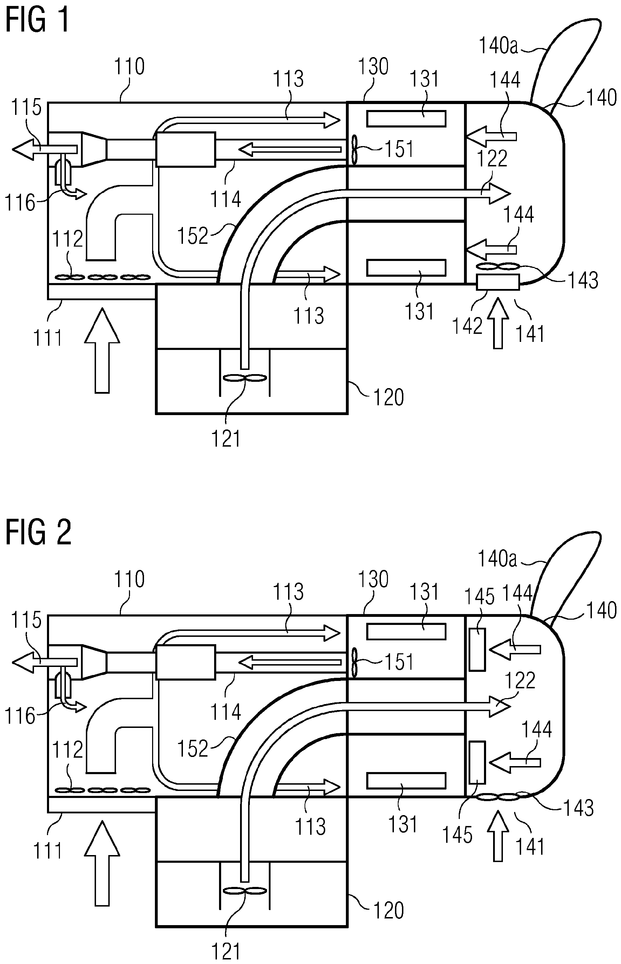

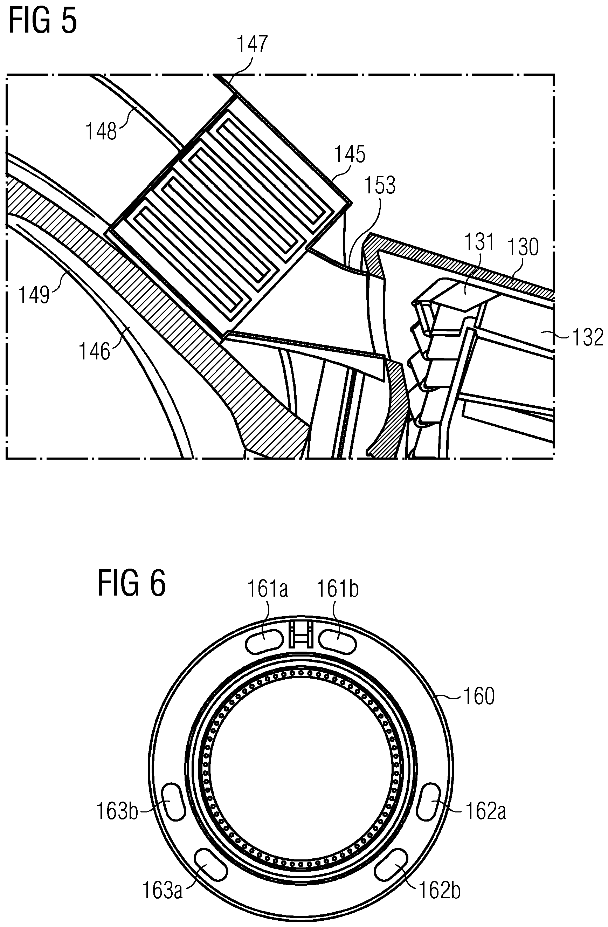

Figure 1 shows a wind turbine according to an embodiment of the invention. The wind turbine comprises a nacelle 110 mounted on top of a tower 120, a generator comprising a rotor 130 with magnets arranged to rotate around generator windings 131 mounted on a stator 132 (shown in Figure 5), and a rotatable front assembly 140 arranged on the side of the generator 130, 131, 132 that is opposite to (i.e. facing away from) the nacelle 110. The rotatable front assembly 140 comprises at least one rotor blade 140a, preferably three rotor blades 140a. It is noted that the wind turbine shown in Figure 1 is a direct drive wind turbine. However, the present invention is equally applicable to other types of wind turbines, such as gear drive wind turbines.

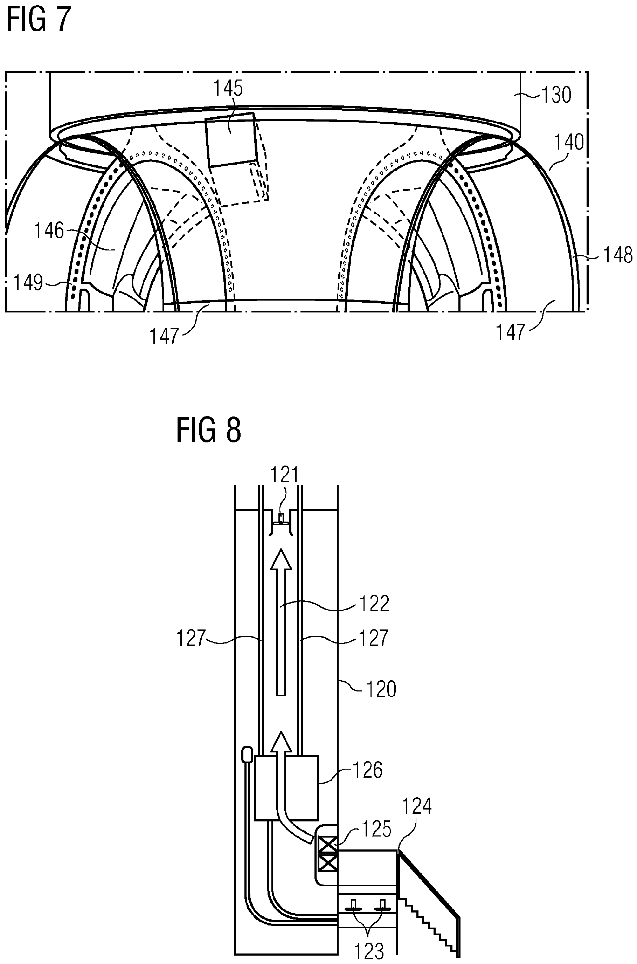

The wind turbine further comprises a cooling system for cooling the generator 130, 131, 132, in particular the generator windings 131, 132, by feeding cooling air 144 from the rotatable front assembly 140 into the generator 130, 131, 132. The cooling air 144 is obtained through front assembly air intake 141, or as tower air 122 which is guided from the tower 120 through tower air guiding means 152, such as a pipe. The cooling air may also be a blend of air taken in through the front assembly air intake 141 and tower air 122. In the latter case, the tower air 122 may in particular be useful for reducing the humidity of the cooling air 144, as will be described in more detail below in conjunction with Figure 8.

An inlet filter 142, such as a moisture filter, dirt filter, salt filter or a combination thereof, is arranged in the air intake 141 to filter the ambient air that is taken into the front assembly 140. Optionally, an inlet fan 143 may also be arranged in the vicinity of the air intake 141.

The cooling air 144 is guided into the generator 130, 131, 132 through suitable openings connecting the rotatable front assembly 140 and the generator 130, 131, 132. As will be discussed in more detail further below in conjunction with Figure 6, the openings may in particular be formed in a rotor front plate. A rear fan 151 arranged in the vicinity of an interface between the generator 130, 131, 132 and the nacelle 110 draws the cooling air 144 through the generator 130, 131, 132. After being circulated within the generator 130, 131, 132, in particular in the vicinity of the generator windings 131, the cooling air 144 leaves the generator 130, 131, 132 and passes through an exhaust guide 114 in the nacelle 110 before it leaves the nacelle 110 as exhaust air 115.

In an optional modification of the embodiment, cooling air 113 may also be supplied from the nacelle 110 into the generator 130, 131, 132. For this purpose, ambient air is taken into the nacelle through filer 111 with support from fans 112 and guided into the generator 130, 131, 132 as shown in Figure 1. The humidity of the nacelle cooling air 113 may be reduced by means of exhaust air bypass 116 which bypasses a part of the exhaust air 115 into the nacelle where it is mixed with the air taken in through filter 111.

It is explicitly noted that although Figure 1 only shows one front assembly air intake 141, the front assembly 140 may comprise any number of air intakes 141, in particular two, three, four or even more air intakes 141.

Figure 2 shows a wind turbine according to a further embodiment of the invention. More specifically, the embodiment shown in Figure 2 only differs from the embodiment shown in Figure 1 and discussed in detail above in that the intake filter 141 is replaced by filters 145 arranged in the vicinity of the openings or connections between the rotatable front assembly 140 and the generator 130, 131, 132. Accordingly, in this embodiment the filtering of the air takes place where the cooling air 144 enters the generator 130, 131, 132 instead of where ambient air enters the rotatable front assembly 140. In a modification of the embodiment shown in Figure 2, both an inlet filter 142 as the one shown in Figure 1 and the filters 145 shown in Figure 2 may be used.

With regard to the remaining structure of the wind turbine shown in Figure 2, reference is made to the corresponding description in relation to Figure 1 above.

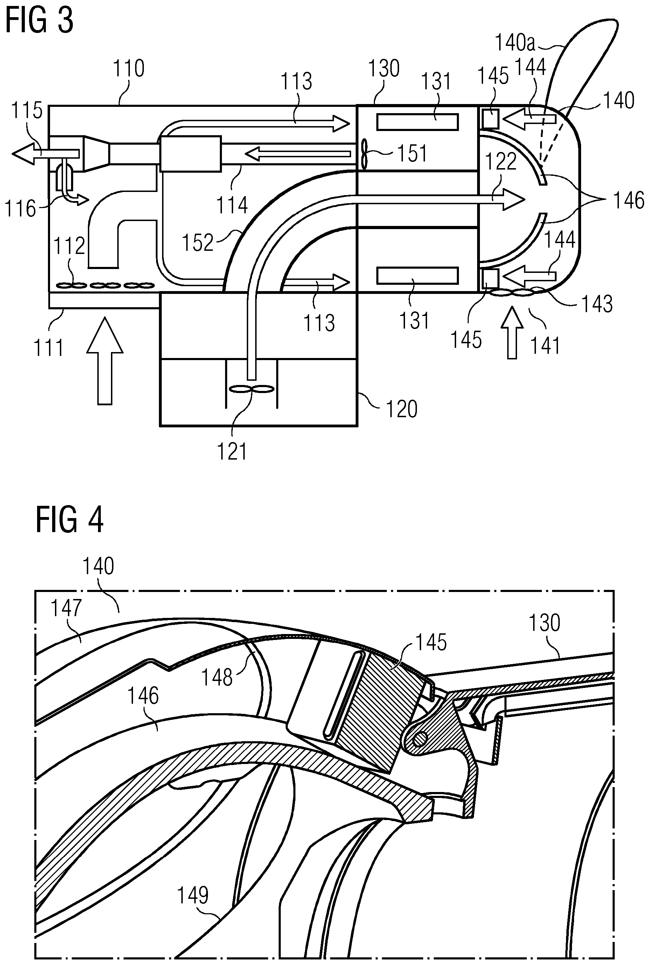

Figure 3 shows a wind turbine according to a further embodiment of the invention. More specifically, the embodiment shown in Figure 3 is a modification of the embodiment shown in Figure 2 and discussed above. In addition to the elements shown in Figure 2, the front assembly 140 in Figure 3 is shown as including a hub 146 for supporting the rotor blade(s) of the wind turbine (not shown). Here, the filters 145 are arranged between the outer surface of the hub and close to the outer wall or cover (also referred to as the spinner) of the front assembly 140. The tower air 122 is guided through the hub 146 to blend with the ambient air taken in through air intake(s) 141.

Figure 4 shows a first partial view of a rotatable front assembly of a wind turbine in accordance with an embodiment of the invention. More specifically, Figure 4 shows the rotatable front assembly 140 comprising spinner (or cover) 147 and hub 146. The spinner 147 comprises an opening 148 for letting a rotor blade (not shown) through. The hub 146 comprises an opening or mounting portion 149 in which the rotor blade is to be mounted. The filter 145 is arranged between the spinner 147 and the hub 146 close to an opening into the generator 130, 131, 132. Thereby, ambient air may be taken in through the blade opening 148 and pass through the filter 145 and into the generator 130.

Figure 5 shows a further partial view of the rotatable front assembly 140 shown in Figure 4. In particular, Figure 5 shows an air guide 153 arranged on the side of the filter 145 facing the generator 130, 131, 132 for guiding the filtered cooling air into the generator 130, 131, 132 in order to cool the generator windings 131.

With regard to Figures 4 and 5, it is noted that the spinner 147 and hub 146 may be designed to receive and hold more than one rotor blade, in particular three rotor blades. Furthermore, a plurality of filters 145 may be arranged around the perimeter of the generator rotor 130.

In a modification of the embodiment shown in Figure 5, a front assembly air intake may be formed in the gap between the front assembly 140 and the generator 130, e.g. above the air guide 153. In this case, ducts or pipes will additionally be formed between the gap and the spinner 147 or the spinner-sided air-intake of the filter(s) 145 in order to transport the air taken in towards the front of the front assembly 140 (i.e. towards the left side (i.e. air-intake side) of filter 145 in Figure 5), such that the air can be sent through the filter 145, into the air guide 153 and further into the generator 130 as discussed above.

Figure 6 shows a rotor front plate 160 of a wind turbine in accordance with an embodiment of the invention. The front rotor plate 160 designed to be arranged at the drive end of the generator 130, i.e. facing the rotatable front assembly 140, on the rotor of the generator 130 which rotates around the windings 131 to induce electrical currents therein. As shown, the front rotor plate 160 comprises three pairs of holes or openings 161a, 161b, 162a, 162b, 163a, 163b arranged close to the perimeter of the front rotor plate 160. Each opening 161a, 161b, 162a, 162b, 163a, 163b may be connected with a corresponding filter 145 and a corresponding air guide 153 in the way shown in Figure 5.

It is noted that Figure 6 also shows a cut-out formed between the openings 161a and 161b. The cut-out is shaped to interact with a lifting tool during assembly of the wind turbine. Due to the large forces and stress that may occur during assembly, it may be advantageous to leave out the pair of openings 161a and 161b (which may otherwise be deformed during assembly) and instead increase the size of the other openings 162a, 162b, 163a, 163b.

Figure 7 shows a further partial view of the rotatable front assembly shown in Figures 4 and 5. In particular, the view of Figure 7 shows that the hub 146 comprises three blade mounting portions 149 and that the spinner 147 comprises three corresponding blade openings 148. Although only a single filter unit 145 is shown (for reasons of clarity), a total of six filter units 145 may be implemented and arranged as discussed in connection with Figure 6 above.

Figure 8 shows the tower 120 of a wind turbine according to an embodiment of the invention, in particular according to any of the embodiments described above or below. As shown, the tower 120 comprises a tower fan 121 arranged at an upper portion of the tower for drawing tower air 122 upwards (towards the nacelle) within the tower 120. The tower air 122 is taken into the tower 120 in the area of tower entrance 124. The air intake may be supported by lower fans 123. The air entering the tower is filtered by filters 125 and passed by electrical installations 126. On its way towards the fan 121 at the top of the tower, the air is heated by heat emitted by power cables 127. The power cables 127 transmit electrical power generated by the generator to the electrical installations 126, such as transformer, converter etc. Accordingly, once the tower air 122 reaches the top of the tower 120, it is warmer and relatively dry, i.e. it has a lower relative humidity than the surrounding air. Accordingly, the tower air 122 will be highly suitable for cooling and/or dehumidifying the cooling air 144 supplied to the generator from the rotatable front assembly as described above. Simultaneously, the temperature of the cooling air 144 supplied to the generator will be increased to some extent. The humidity and the temperature of the cooling air 144 arriving at the generator can thus be controlled by the amount of tower air 122 provided by the fan 121 and/or fan 125 at the bottom or the top of the tower 120.

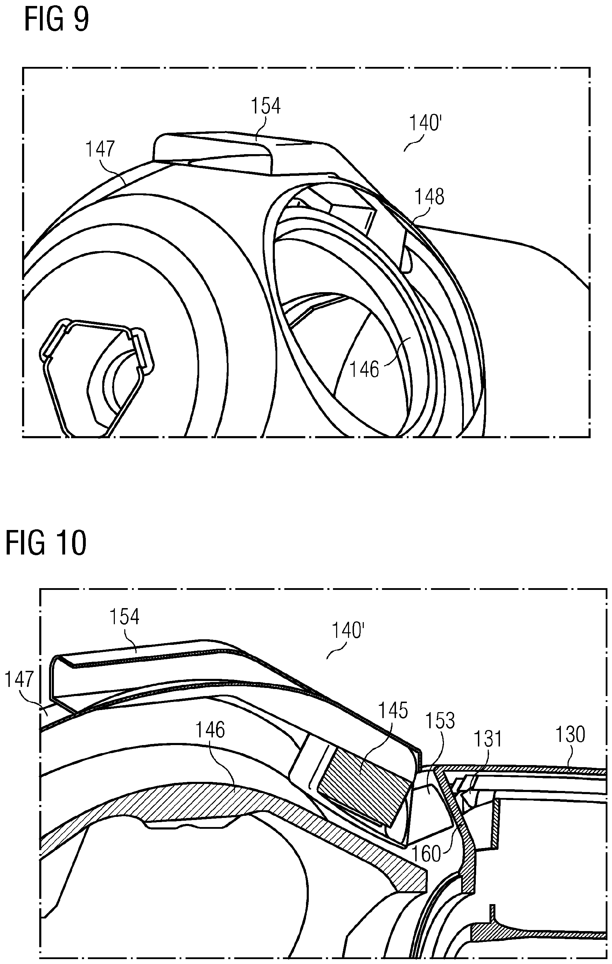

Figure 9 shows an overview of a rotatable front assembly 140' of a wind turbine in accordance with an alternative embodiment of the invention. The rotatable front assembly 140' of this embodiment differs from the rotatable front assembly 140 described in conjunction with the previous embodiments in that ambient air is not taken in through the blade opening 148 but instead through an air guide 154 arranged on the outer surface of the spinner 147. The air guide 154 is formed as a rectangular, relatively flat conduit extending over the surface of the spinner 147 in such a way that the opening faces the incoming wind. Thereby, ambient air can easily be drawn into the rotatable front assembly 140' and fed into the generator 130 to cool the generator windings 131.

Figure 10 shows a detailed view of a part of the rotatable front assembly 140' shown in Figure 9. As shown, ambient air is taken in through the air guide 154 and guided through the filter 145 and into the generator 130 by the air guide 153 extending through the front rotor plate 160.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A wind turbine comprising
a nacelle (110) supported by a tower (120),
a generator (130, 131, 132),
a rotatable front assembly (140) arranged on a side of the generator (130, 131, 132) facing away from the nacelle (110), and
a cooling system for cooling the generator (130, 131, 132) by feeding cooling air (144) from the rotatable front assembly (140) to the generator (130, 131, 132),
wherein the rotatable front assembly (140) comprises a front assembly air intake (141), and wherein the cooling air (144) comprises air taken in through the front assembly air intake (141), **characterized in that** the tower (120) comprises a tower air intake located at a base portion of the tower (120) and power cables (127) for transmitting power from the generator to the base portion, and wherein the cooling system comprises means for guiding air (122) from the tower air intake to the rotatable front assembly (140) such that the air is heated by the power cables (127), whereby the cooling air (144) comprises air (122) taken in through the tower air intake.

2. The wind turbine according to the preceding claim, wherein the rotatable front assembly (140) comprises a hub (146), at least one rotor blade (140a) mounted on the hub (146), and a spinner (147) covering the hub (146).

3. The wind turbine according to the preceding claim, wherein the front assembly air intake (141) is at least partially coincident with an opening (148) in the spinner (147) through which the at least one rotor blade (140a) extends.

4. The wind turbine according to the preceding claim, wherein the front assembly air intake (141) comprises a ring-shaped opening surrounding the at least one rotor blade (140a).

5. The wind turbine according to claim 2, wherein the front assembly air intake (141) comprises an air guide (154) arranged on an outer surface of the spinner (147).

6. The wind turbine according to any of the preceding claims, wherein the front assembly air intake (141) comprises an intake filter (142) and/or an intake fan (143).

7. The wind turbine according to any of the preceding claims , wherein the tower air reduces the relative humidity of the cooling air.

8. The wind turbine according to any of the preceding claims, wherein the cooling system further comprises a tower fan (121, 123) arranged within the tower (120).

9. The wind turbine according to any of the preceding claims, wherein the rotatable front assembly (140) comprises one or more openings (161a, 161b, 162a, 162b, 163a, 163b) facing the generator (130), the openings (161a, 161b, 162a, 162b, 163a, 163b) being adapted to feed the cooling air (144) to the generator (130).

10. The wind turbine according to the preceding claim, wherein a filter (145) is arranged in the vicinity of each of the one or more openings (161a, 161b, 162a, 162b, 163a, 163b).

11. The wind turbine according to the preceding claim, wherein the filter (145) arranged in each of the one or more openings (161a, 161b, 162a, 162b, 163a, 163b) is selected from the group consisting of a moisture filter, a dirt filter, and a salt filter.

12. The wind turbine according to any of the preceding claims, wherein the cooling system further comprises a rear fan (151) arranged at a side of the generator (130) facing away from the rotatable front assembly (140), the rear fan (151) being adapted to draw the cooling air (144) from the rotatable front (140) assembly through the generator (130) and towards the nacelle (110).

13. The wind turbine according to any of the preceding claims, wherein the cooling system is further adapted to feed additional cooling air (113) from the nacelle (110) to the generator (130).

14. A method of cooling a generator (130, 131, 132) of a wind turbine, the wind turbine comprising a nacelle (110) supported by a tower (120), the generator (130, 131, 132), and a rotatable front assembly (140) arranged on a side of the generator (130, 131, 132) facing away from the nacelle (110), the method comprising
feeding cooling air (144) from the rotatable front (140) assembly to the generator (130, 131, 132),
wherein the cooling air (144) comprises a mixture of air taken in through a front assembly air intake (141) and tower air (122) taken in through a tower air intake located at a base portion of the tower (120), wherein the tower air is guided up through the tower (120) and heated by power cables extending within the tower (120) such that the relative humidity of the tower air (122) is lower than the relative humidity of the air taken in through the front assembly air intake (141).

## Patentansprüche

1. Windenergieanlage, die Folgendes umfasst:
eine Gondel (110), die von einem Turm (120) getragen wird,
einen Generator (130, 131, 132),
eine drehbare vordere Baugruppe (140), die auf einer von der Gondel (110) weg weisenden Seite des Generators (130, 131, 132) angeordnet ist, und
ein Kühlsystem zum Kühlen des Generators (130, 131, 132) durch Leiten von Kühlluft (144) aus der drehbaren vorderen Baugruppe (140) zum Generator (130, 131, 132),
wobei die drehbare vordere Baugruppe (140) einen Lufteinlass (141) der vorderen Baugruppe umfasst und die Kühlluft (144) Luft umfasst, die über den Lufteinlass (141) der vorderen Baugruppe hereinströmt, **dadurch gekennzeichnet, dass**
der Turm (120) einen Turmlufteinlass, der sich an einem Sockelabschnitt des Turms (120) befindet, und Stromkabel (127) zum Übertragen von Strom aus dem Generator zum Sockelabschnitt umfasst, und wobei das Kühlsystem Mittel zum derartigen Leiten von Luft (122) aus dem Turmlufteinlass zu der drehbaren vorderen Baugruppe (140) umfasst, dass die Luft von den Stromkabeln (127) erwärmt wird, wobei die Kühlluft (144) Luft (122) umfasst, die über den Turmlufteinlass hereinströmt.

2. Windenergieanlage nach dem vorhergehenden Anspruch, wobei die drehbare vordere Baugruppe (140) eine Nabe (146), mindestens ein an der Nabe (146) angebrachtes Rotorblatt (140a) und einen die Nabe (146) überdeckenden Spinner (147) umfasst.

3. Windenergieanlage nach dem vorhergehenden Anspruch, wobei der Lufteinlass (141) der vorderen Baugruppe zumindest teilweise mit einer Öffnung (148) in dem Spinner (147) übereinstimmt, durch die sich das mindestens eine Rotorblatt (140a) erstreckt.

4. Windenergieanlage nach dem vorhergehenden Anspruch, wobei der Lufteinlass (141) der vorderen Baugruppe eine ringförmige Öffnung umfasst, die das mindestens eine Rotorblatt (140a) umgibt.

5. Windenergieanlage nach Anspruch 2, wobei der Lufteinlass (141) der vorderen Baugruppe eine Luftführung (154) umfasst, die an einer Außenfläche des Spinners (147) angeordnet ist.

6. Windenergieanlage nach einem der vorhergehenden Ansprüche, wobei der Lufteinlass (141) der vorderen Baugruppe einen Einlassfilter (142) und/oder ein Ansauggebläse (143) umfasst.

7. Windenergieanlage nach einem der vorhergehenden Ansprüche, wobei die Turmluft die relative Feuchtigkeit der Kühlluft verringert.

8. Windenergieanlage nach einem der vorhergehenden Ansprüche, wobei das Kühlsystem ferner ein in dem Turm (120) angeordnetes Turmgebläse (121, 123) umfasst.

9. Windenergieanlage nach einem der vorhergehenden Ansprüche, wobei die drehbare vordere Baugruppe (140) eine oder mehrere zum Generator (130) weisende Öffnungen (161a, 161b, 162a, 162b, 163a, 163b) umfasst, die so ausgelegt sind, dass sie die Kühlluft (144) zum Generator (130) leiten.

10. Windenergieanlage nach dem vorhergehenden Anspruch, wobei ein Filter (145) in der Nähe jeder der einen oder der mehreren Öffnungen (161a, 161b, 162a, 162b, 163a, 163b) angeordnet ist.

11. Windenergieanlage nach dem vorhergehenden Anspruch, wobei der Filter (145), der in jeder der einen oder der mehreren Öffnungen (161a, 161b, 162a, 162b, 163a, 163b) angeordnet ist, aus der Gruppe ausgewählt ist, die aus einem Feuchtigkeitsfilter, einem Schmutzfilter und einem Salzfilter besteht.

12. Windenergieanlage nach einem der vorhergehenden Ansprüche, wobei das Kühlsystem ferner ein hinteres Gebläse (151) umfasst, das auf einer von der drehbaren vorderen Baugruppe (140) weg weisenden Seite des Generators (130) angeordnet ist, wobei das hintere Gebläse (151) so ausgelegt ist, dass es die Kühlluft (144) über den Generator (130) aus der drehbaren vorderen Baugruppe (140) zur Gondel (110) hin saugt.

13. Windenergieanlage nach einem der vorhergehenden Ansprüche, wobei das Kühlsystem ferner so ausgelegt ist, dass es zusätzliche Kühlluft (113) aus der Gondel (110) zum Generator (130) leitet.

14. Verfahren zum Kühlen eines Generators (130, 131, 132) einer Windenergieanlage, die eine von einem Turm (120) getragene Gondel (110), den Generator (130, 131, 132) und eine drehbare vordere Baugruppe (140) umfasst, die auf einer von der Gondel (110) weg weisenden Seite des Generators (130, 131, 132) angeordnet ist, wobei das Verfahren Folgendes umfasst:
Leiten von Kühlluft (144) aus der drehbaren vorderen Baugruppe (140) zum Generator (130, 131, 132),
wobei die Kühlluft (144) ein Gemisch aus über einen Lufteinlass (141) der vorderen Baugruppe hereinströmender Luft und Turmluft (122) umfasst, die über einen Turmlufteinlass an einem Sockelabschnitt des Turms (120) hereinströmt, wobei die Turmluft in dem Turm (120) nach oben geführt und von Stromkabeln erwärmt wird, die sich in dem Turm (120) erstrecken, so dass die relative Feuchtigkeit der Turmluft (122) geringer ist als die relative Feuchtigkeit der über den Lufteinlass (141) der vorderen Baugruppe hereinströmenden Luft.

## Revendications

1. Éolienne comprenant
une nacelle (110) portée par une tour (120),
un générateur (130, 131, 132),
un ensemble avant rotatif (140) agencé sur un côté du générateur (130, 131, 132) opposé à la nacelle (110), et
un système de refroidissement pour refroidir le générateur (130, 131, 132) en amenant un air de refroidissement (144) de l'ensemble avant rotatif (140) au générateur (130, 131, 132),
dans laquelle l'ensemble avant rotatif (140) comprend une admission d'air d'ensemble avant (141), et dans laquelle l'air de refroidissement (144) comprend de l'air puisé à travers l'admission d'air d'ensemble avant (141),
**caractérisée en ce que**
la tour (120) comprend une admission d'air de tour située au niveau d'une partie de base de la tour (120) et des câbles d'alimentation (127) pour transmettre de l'électricité du générateur à la partie de base, et dans laquelle le système de refroidissement comprend des moyens pour guider l'air (122) de l'admission d'air de tour à l'ensemble avant rotatif (140) de sorte que l'air est chauffé par les câbles d'alimentation (127), moyennant quoi l'air de refroidissement (144) comprend de l'air (122) puisé à travers l'admission d'air de tour.

2. Éolienne selon la revendication précédente, dans laquelle l'ensemble avant rotatif (140) comprend un moyeu (146), au moins une pale de rotor (140a) montée sur le moyeu (146) et un capot (147) recouvrant le moyeu (146).

3. Éolienne selon la revendication précédente, dans laquelle l'admission d'air d'ensemble avant (141) est au moins partiellement coïncidente avec une ouverture (148) dans le capot (147) à travers laquelle l'au moins une pale de rotor (140a) s'étend.

4. Éolienne selon la revendication précédente, dans laquelle l'admission d'air d'ensemble avant (141) comprend une ouverture à géométrie annulaire encerclant l'au moins une pale de rotor (140a).

5. Éolienne selon la revendication 2, dans laquelle l'admission d'air d'ensemble avant (141) comprend un guide d'air (154) agencé sur une surface externe du capot (147).

6. Éolienne selon l'une quelconque des revendications précédentes, dans laquelle l'admission d'air d'ensemble avant (141) comprend un filtre d'admission (142) et/ou une soufflante d'admission (143).

7. Éolienne selon l'une quelconque des revendications précédentes, dans laquelle l'air de tour réduit l'humidité relative de l'air de refroidissement.

8. Éolienne selon l'une quelconque des revendications précédentes, dans laquelle le système de refroidissement comprend en outre une soufflante de tour (121, 123) agencée à l'intérieur de la tour (120).

9. Éolienne selon l'une quelconque des revendications précédentes, dans laquelle l'ensemble avant rotatif (140) comprend une ou plusieurs ouvertures (161a, 161b, 162a, 162b, 163a, 163b) faisant face au générateur (130), les ouvertures (161a, 161b, 162a, 162b, 163a, 163b) étant conçues pour amener l'air de refroidissement (144) au générateur (130).

10. Éolienne selon la revendication précédente, dans laquelle un filtre (145) est agencé au voisinage de chacune desdites une ou plusieurs ouvertures (161a, 161b, 162a, 162b, 163a, 163b).

11. Éolienne selon la revendication précédente, dans laquelle le filtre (145) agencé dans chacune desdites une ou plusieurs ouvertures (161a, 161b, 162a, 162b, 163a, 163b) est sélectionné parmi le groupe constitué d'un filtre à humidité, d'un filtre à salissures et d'un filtre à sel.

12. Éolienne selon l'une quelconque des revendications précédentes, dans laquelle le système de refroidissement comprend en outre une soufflante arrière (151) agencée sur un côté du générateur (130) opposé à l'ensemble avant rotatif (140), la soufflante arrière (151) étant conçue pour aspirer l'air de refroidissement (144) à partir de l'ensemble avant rotatif (140) à travers le générateur (130) et en direction de la nacelle (110).

13. Éolienne selon l'une quelconque des revendications précédentes, dans laquelle le système de refroidissement est en outre conçu pour amener un air de refroidissement supplémentaire (113) de la nacelle (110) au générateur (130).

14. Procédé de refroidissement d'un générateur (130, 131, 132) d'une éolienne, l'éolienne comprenant une nacelle (110) portée par une tour (120), le générateur (130, 131, 132) et un ensemble avant rotatif (140) agencé sur un côté du générateur (130, 131, 132) opposé à la nacelle (110), le procédé comprenant
le fait d'amener un air de refroidissement (144) de l'ensemble avant rotatif (140) au générateur (130, 131, 132),
dans lequel l'air de refroidissement (144) comprend un mélange d'un air puisé à travers une admission d'air d'ensemble avant (141) et d'un air de tour (122) puisé à travers une admission d'air de tour située au niveau d'une partie de base de la tour (120), dans lequel l'air de tour est guidé vers le haut à travers la tour (120) et chauffé par des câbles d'alimentation s'étendant à l'intérieur de la tour (120) de sorte que l'humidité relative de l'air de tour (122) est inférieure à l'humidité relative de l'air puisé à travers l'admission d'air d'ensemble avant (141).
